# EUROPÄISCHE PATENTSCHRIFT

(11) **EP 1 451 043 B1**
(45) Veröffentlichungstag und Bekanntmachung des Hinweises auf die Patenterteilung: **01.03.2006**
(21) Anmeldenummer: 02791604.8
(22) Anmeldetag: 03.12.2002
(51) Int. Cl.: B60R 21/01

(54) **SENSORANORDNUNG**
SENSOR ARRANGEMENT
ENSEMBLE CAPTEUR

(30) Priorität: 07.12.2001 DE 10160121
(43) Veröffentlichungstag der Anmeldung: 01.09.2004
(73) Patentinhaber: SIEMENS AKTIENGESELLSCHAFT, 80333 München (DE)
(72) Erfinder: WILD, Gerhard, 93057 Regensburg (DE)
(86) Internationale Anmeldenummer: PCT/DE2002/004429
(87) Internationale Veröffentlichungsnummer: WO 2003/053750

(56) Entgegenhaltungen:
- DE-C- 4 237 072
- DE-C- 19 956 545
- DE-U- 20 014 200
- US-A- 4 314 227
- US-A- 4 314 228
- US-A- 5 896 090

## Beschreibung

Die Erfindung betrifft eine flächige Sensoranordnung, insbesondere eine Sensorsitzmatte zur Sitzbelegungserkennung in einem Kraftfahrzeug.

Bei einer Vielzahl von technischen Anwendungen in Kraftfahrzeugen spielt die Sitzbelegung durch Kraftfahrzeuginsassen eine große Rolle. In besonderem Maße gilt dies für Insassenrückhaltesysteme, deren effizienter Einsatz sehr oft von der Sitzposition des Fahrzeuginsassen abhängig gemacht wird.

Die einfachste Sitzbelegungserkennung ist das Erkennen der Anwesenheit eines Fahrzeuginsassen beispielsweise durch Kontaktschalter im Fahrzeugsitz.
Andere Messsysteme zur Sitzbelegungserkennung erfassen das Gewicht eines Fahrzeuginsassen oder sogar dessen Gewichtsverteilung auf einem Fahrzeugsitz. Dies ermöglicht einerseits ein Erkennen der Anwesenheit eines Fahrzeuginsassen, zum anderen kann eine Bestimmung seines Körpergewichts oder seiner Gewichtsverteilung auf dem Fahrzeugsitz erfolgen. Je nach Sensoranordnung und Messverfahren können diese beiden Informationen gleichzeitig oder unabhängig voneinander gemessen werden.

Zum Erfassen der Messgröße, insbesondere des Gewichts, werden zumeist Sensorsitzmatten verwendet, bestehend aus einer Vielzahl von druckempfindlichen Sensorelementen, die auf der Sitzfläche verteilt in Zeilen und Spalten angeordnet sind.

Aus dem Stand der Technik sind insbesondere Sensorelemente in Sensorsitzmatten bekannt, die im wesentlichen zwei parallel zueinander angeordnete, elektrisch isolierende Folien aufweisen. Zwischen diesen befindet sich eine gleichfalls elektrisch isolierende Zwischenschicht, die beide Folien voneinander in Abstand hält. Auf den einander zugewandten Seiten der Folien sind elektrisch leitfähige Flächen aufgebracht, zwischen denen hochohmiges Material angeordnet ist, vorzugsweise Luft.

Durch Druckeinwirkung auf die Sensorsitzmatte, beispielsweise durch das Körpergewicht eines Fahrzeuginsassen, werden die leitfähigen Flächen in leitenden Kontakt miteinander gebracht, so dass der elektrische Übergangswiderstand zwischen den beiden leitfähigen Flächen abhängig von der Druckamplitude ist.

Die leitfähigen Flächen bekannter Sensorelemente, im folgenden auch Sensorzellen genannt, weisen Rotationssymmetrie um die Flächennormale auf. In einer Sensoranordnung als Sensorsitzmatte werden viele gleichartige, runde Sensorzellen flächig auf einem Fahrzeugsitz angeordnet.

Solche Sensoranordnungen sind bekannt aus US 58 96 090 A, DE 200 14 200 U1, die als nächstliegender Stand der Technik betrachtet wird, sowie DE 42 37 072 C1, geeignete Sensorzellen für diese Sensoranordnungen sind beschrieben in US 43 14 228, DE 200 14 200 U1 beziehungsweise US 43 14 227.

Problematisch bei den bekannten Sensoranordnungen ist, dass die Sensorzellen zumeist auf einer unebenen Oberfläche eines Fahrzeugsitzes angebracht werden, wodurch die Sensorzellen je nach Position auf der Sensorsitzmatte unterschiedlichen Zug- oder Biegebelastungen ausgesetzt sind, insbesondere also entlang von Knicklinien der Sensoranordnung.

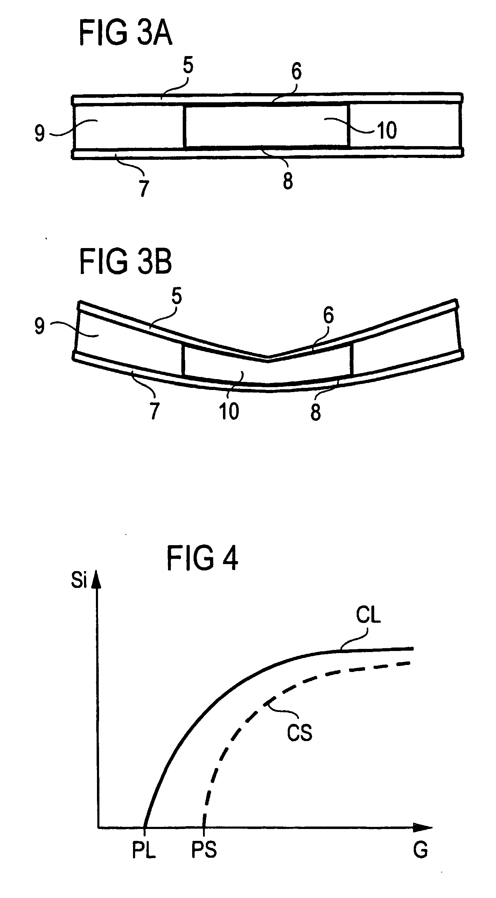

Die aus dem Stand der Technik bekannten Sensorelemente sind derart aufgebaut, dass sie sehr empfindlich auf solche Zug- oder Biegebelastungen an Knicklinien reagieren. Die Signalkennlinie der Sensorelemente abhängig von dem auf sie wirkenden Gewicht verändert sich dadurch. Üblicherweise verschiebt die Verbiegung der Sensorelemente einen konstanten Offset PL der Signalkennlinie zu niedrigeren Werten wie in Figur 4 dargestellt.
Für verschiedene Messsysteme zur Sitzbelegungserkennung kann diese Verschiebung der Sensorkennlinie verschiedene Auswirkungen haben:

Gegebenenfalls wird auch dann schon ein Passagier auf dem Fahrzeugsitz erkannt, wenn sich dort nur ein kleiner, leichter Gegenstand befindet. Ein Airbag würde aufgrund dieser falschen Information bei einem Fahrzeugaufprall unnötigerweise aufgeblasen werden, um den vermeintlichen Fahrzeugpassagier zu schützen.

Bei anderen Systemen zur Sitzbelegungserkennung wird bei einer Verschiebung des konstanten Offsets der Sensorkennlinie ein falsches Gewicht beziehungsweise eine falsche Gewichtsverteilung eines Fahrzeuginsassen an das Insassenschutzsystem gemeldet. Wird aufgrund dieser falschen Information ein Insassenschutzmittel beispielsweise zu früh ausgelöst, so kann dies schwere Verletzungen für einen Fahrzeuginsassen zur Folge haben kann.

Die Veränderung der Sensorkennlinie unter der Einwirkung einer Zug- oder Biegebelastung auf das Sensorelement an einer Knicklinie eines Fahrzeugsitzes nennt man Preload-Effekt.

Aufgrund des Preload - Effekts wird eine Anordnung von Sensorzellen in Sensorsitzmatten an stark gekrümmten Stellen oder an Nähten eines Fahrzeugsitzes oftmals vermieden. An solchen von der Messung ausgesparten Stellen geht dadurch allerdings wichtige Information über den Fahrzeuginsassen verloren. Auch dies kann im Falle eines Aufprallunfalls schwere Verletzungen des Fahrzeuginsassen nach sich ziehen, wenn das Insassenschutzsystem aufgrund fehlender Information nicht die optimale Schutzwirkung für den Fahrzeuginsassen entfalten konnte.

Eine weitere Maßnahme zur Vermeidung des Preload - Effekts ist eine Verkleinerung der leitfähigen Flächen der bekannten Sensorzellen.
Bei kleinen Sensorzellen liegt der konstante Offset(PS)der Sensorkennlinie grundsätzlich bei höheren Werten als bei größeren Sensorzellen (Figur 4). Dadurch zeigt sich der Preload-Effekt zwar erst bei weit größeren Biegebelastungen als bei großflächigen Sensorelementen.
Jedoch verliert die Sensorkennlinie einer kleineren Sensorzelle (CS) an Auflösungsgenauigkeit im Vergleich zur Kennlinie einer größeren Sensorzelle (CL), da die Steigung ihrer Signalkennlinie steiler wird. Gleichzeitig verringert sich auch der Wertebereich ihrer Kennlinie (Figur 4).

Auch hier kann aufgrund einer zu ungenauen Information über den Fahrzeuginsassen eine optimal an die Sitzbelegung angepasste Schutzwirkung eines Insassenschutzsystems gegebenenfalls ausbleiben.

Der Erfindung liegt die Aufgabe zugrunde, die vorstehend beschriebene bekannte Sensorsitzmatte dahingehend zu verbessern, dass die Sensorelemente auch an einbaubedingten Knicklinien aussagekräftige Gewichtmessungen auf einem Fahrzeugsitz ermöglichen.

Die Aufgabe wird gelöst durch die Merkmale des Anspruchs 1.

Zumindest ein Sensorelement der Sensoranordnung ist nicht rotationssymmetrisch ausgebildet und weist dabei den Vorteil auf, dass es angeordnet entlang einer einbaubedingten Knicklinie einen sehr geringen Preload-Effekt aufweist, unabhängig davon jedoch eine sehr große Auflösung des gewichtsabhängigen Sensorsignals innerhalb eines sehr großen Wertebereichs erreicht.

Der rotationssymmetrische Aufbau der aktiven Fläche bekannter Sensorelemente muss dazu an solchen einbaubedingten Knicklinien aufgegeben werden zugunsten einer nicht rotationssymmetrischen aktiven Fläche des Sensorelements. Aus dem Stand der Technik sind kreisförmige aktive Flächen bekannt. Diese sind beispielsweise durch ovale aktive Flächen zu ersetzen. Es sind jedoch auch weitere Ausführungsformen möglich.

Knicklinien an einem Fahrzeugsitz sind beispielsweise gekrümmte Oberflächen an einer Schenkelablage oder an beidseitigen Sitzwangen oder entlang von Nähten des Sitzbezuges.

Als aktive Fläche eines Sensorelements wird die flächige Projektion desjenigen Sensorbereichs bezeichnet, der innerhalb des Nutzbereichs der Sensorkennlinie - das heißt vor Erreichen eines im wesentlichen konstanten Maximalwertes der Sensorkennlinie - gewichtsabhängig und signalbeeinflussend zur Sensorkennlinie beiträgt (Figur 4).

Ein kreisförmiges Sensorelement kann durchaus zur verbesserten elektrischen Kontaktierung Ausbuchtungen seiner Kreislinie aufweisen, die beispielsweise als Zuleitung über die Sitzmatte weitergeführt werden bis hin zur Auswerteelektronik der Sensorsitzmatte. Die aktive Fläche des Sensorelements ist dennoch kreisförmig. In diesem Sinne wird auch der Begriff der Rotationssymmetrie verwendet.

Weitere vorteilhafte Ausbildungen werden durch die Unteransprüche beansprucht.

Die Erfindung wird nachfolgend anhand von ausgewählten Ausführungsbeispielen dargestellt.
Es zeigen:
- Figur 1: die ovale Fläche eines erfindungsgemäßen Sensorelements 1 mit elektrischer Zuleitung 11 in einer schematischen Darstellung,
- Figur 2a: einen Querschnitt durch ein bekanntes rotationssymmetrisches großes Sensorelement,
- Figur 2b: den Querschnitt durch das Sensorelement aus Figur 2a unter dem Einfluss einer Biegebelastung,
- Figur 3a: einen Querschnitt durch ein bekanntes rotationssymmetrisches kleines Sensorelement,
- Figur 3b: den Querschnitt durch das Sensorelement aus Figur 3a unter dem Einfluss einer Biegebelastung,
- Figur 4: eine prinzipielle Signalcharakteristik Si eines bekannten rotationssymmetrischen Sensorelements mit großer Fläche CL und einer Sensorzelle mit kleiner Fläche CS,
- Figuren 5a und 5b: weitere Ausführungsbeispiele für die geometrische Form der Flächen eines erfindungsgemäßen Sensorelements A,
- Figur 6: die kreisförmige Fläche eines bekannten Sensorelements S in Draufsicht und
- Figur 7: eine mögliche Anordnung von kreisförmigen und ovalen Sensorelementen (A, S) auf einem Fahrzeugsitz (Sz).

Als Messgröße wird im Folgenden die auf die Sensorzellen einwirkende Gewichtskraft betrachtet.

Im Folgenden wird ein Sensorelement mit einer runden oder ovalen aktiven Fläche kurz auch als rundes oder ovales Sensorelement bezeichnet.

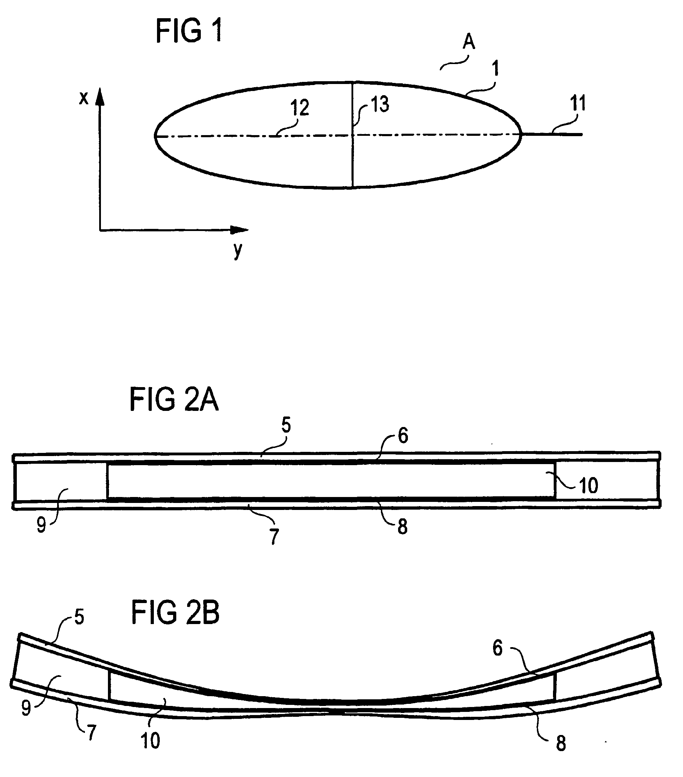

Figur 1 zeigt ein erfindungsgemäßes ovales Sensorelement 1. Das in durchgezogener Linie gezeichnete Oval 1 stellt die obere der beiden übereinander angeordneten leitfähigen Flächen des Sensorelements dar. Die davon zu einer Seite wegführende Linie ist ihre elektrische Zuleitung 11. Nicht dargestellt ist die untere der beiden leitfähigen Flächen.
Die aktive Fläche ist nicht rotationssymmetrisch. Eine längste Schnittlinie 12 durch das Sensorelement ist gestrichelt eingezeichnet.

Bei einer Verbiegung des Sensorelements um die längste Schnittlinie 12 verändert sich das Sensorsignal bei sonst unverändertem Einwirken einer Gewichtskraft auf das Sensorelement. Der konstante Offset der charakteristischen Kennlinie des Sensorelements verschiebt sich zu kleineren Werten hin.

Bei einer Verbiegung um eine dazu senkrechte Achse 13, ist die Verschiebung der Sensorkennlinie jedoch wesentlich stärker ausgeprägt. Der Zahlenwert des konstanten Offsets fällt noch geringer aus, das heißt der Preload-Effekt ist bei einer Verbiegungsachse 13 weitaus stärker als im Falle der dazu senkrechten Achse 12.

Eine einbaubedingte Knicklinie des Sensorelements 1 liegt deshalb vorzugsweise entlang der längsten Schnittlinie 12.

Aufgrund von Einbautoleranzen im Kraftfahrzeug kann diese günstigste Einbauposition eines Sensorelements jedoch nicht immer umgesetzt werden. Die Länge der Schnittlinie durch das Sensorelement entlang der Knicklinie kann um bis zu +-30% von der längsten Schnittlinie 12 abweichen.

Anhand der Figuren 2a bis 3b wird nun das Prinzip dieser Verbiegungsempfindlichkeit erläutert:
Figur 2a zeigt einen Querschnitt durch ein bekanntes Sensorelement in einer Sensorsitzmattenanordnung. Eine obere Sensorfolie 5 aus nicht leitendem Material ist parallel zu einer gleichartigen unteren Sensorfolie 7 angeordnet. Die beiden Folien werden durch einen Abstandhalter 9 aus gleichfalls nicht leitendem Material 10 in einem Abstand zueinander gehalten. Auf den einander zugewandten Seiten sind jeweils leitfähige Flächen 6 und 8 auf die Folien aufgebracht. Zwischen den beiden leitfähigen Flächen befindet sich hochohmiges Material, insbesondere Luft.

Figur 2b zeigt den Querschnitt des Sensorelements aus Figur 2a, wobei das Sensorelement durch eine einwirkende Kraft um eine Knicklinie verbogen wird.
Da die beiden leitfähigen Flächen 6 und 8 entlang des Querschnitts die gleiche Länge aufweisen, durch ihre Abstandhalter 9 jedoch zueinander in einem definierten Abstand gehalten werden, ist die obere Kontaktfläche 6 stärker gekrümmt als die untere Kontaktfläche 8. Dies führt zu einer starken Annäherung der beiden leitenden Flächen 6 und 8 an der Stelle ihrer stärksten Krümmung. Werden beide Kontaktflächen weiter gebogen, so kann es in diesem Bereich zu einem elektrischen Kontakt zwischen den beiden leitfähigen Flächen 6 und 8 kommen.

Da die beiden Flächen auf einem elektrisch unterschiedlichen Potenzial liegen, fließt ein Strom abhängig von dem Übergangswiderstand zwischen den beiden leitfähigen Flächen. Je größer die Kontaktfläche desto geringer wird der Übergangswiderstand zwischen ihnen.
Die Abhängigkeit des Übergangswiderstandes von der so entstehenden Kontaktfläche wird auch bei der Messung eines aufliegenden Gewichts ausgenützt.

Eine Durchbiegung des Sensorelements bis hin zur elektrischen Kontaktierung der beiden leitenden Flächen erzeugt auf diese Art ein falsches Gewichtssignal. Man spricht hier von einem Preload-Effekt. Diesen Preload-Effekt durch eine Verbiegung der Sensorzelle kann die Auswerteeinheit der Sensorsitzmatte nicht von einem Gewichtssignal unterscheiden.

Die Auswertung des Sensorsignals durch eine Verbiegung des Sensorelements erfolgt analog einer Auswertung eines aufliegenden Gewichts. Dabei sind mehrere Methoden zur Auswertung der Sensorsignale möglich:

Um den Stromfluss zwischen Flächen 6 und 8 konstant zu halten, wird die Spannung abhängig von dem Übergangswiderstand zwischen den Flächen variiert. Je größer die Kontaktfläche der beiden leitfähigen Flächen ist, desto kleiner wird der Übergangswiderstand. Je stärker das Sensorelement durchgebogen wird, desto kleiner ist folglich die für den konstanten Stromfluss notwendige Spannung.

Alternativ kann eine Auswertung der Sensorsignale auch bei konstant gehaltener Spannung erfolgen. Das Maß für das aufliegende Gewicht ist dann der variable Stromfluss über den Kontaktwiderstand der beiden leitfähige Flächen 6 und 8.

Figur 3a zeigt den Querschnitt eines Sensorelements, identisch aufgebaut zu dem der Figuren 2a und 2b. Die Flächenausdehnung der leitfähigen Flächen in Querschnittsrichtung ist jedoch wesentlich kleiner.

Figur 3b zeigt den Querschnitt des Sensorelements aus Figur 3a unter dem Einfluss der selben Biegung um eine Knicklinie aus der Zeichenebene heraus.
An den Stellen der stärksten Krümmung ist der Abstand der beiden leitfähigen Flächen 6 und 8 größer als der vergleichbare Abstand aus Figur 3b.

Zum Herstellen eines elektrischen Kontaktes zwischen den leitenden Flächen 6 und 8 muss das kleinere Sensorelement aus Figur 3b wesentlich stärker gekrümmt werden als das größere Sensorelement aus Figur 2b. Bei dem bekannten Aufbau der Sensorzelle ist eine kleinere Fläche des Sensorelements deshalb unempfindlicher gegenüber dem Preload-Effekt als eine größere Fläche. Allerdings verringert sich auch die Signalauflösung der charakteristischen Kennlinie:

Figur 4 zeigt eine Kennlinie eines großen Sensorelements CL und eines kleinen Sensorelement CS anhand einer schematischen Darstellung. Aus Gründen der Anschaulichkeit wird in der Grafik von einfachen rotationssymmetrischen leitfähigen Flächen der Sensorelemente ausgegangen.
Entlang der Abszisse ist das Sensorsignal Si aufgetragen. Die Ordinate zeigt die Gewichtkraft G, die auf die Sensorzelle wirkt.

Die durchgezogene Linie CL stellt die Kennlinie für das großflächige Sensorelement dar:
Erst nach Erreichen einer minimalen Gewichtskraft PL ist die obere leitfähige Fläche 6 des Sensorelements soweit durchgedrückt, dass sie die untere leitfähige Fläche 8 elektrisch kontaktiert.
Zu höheren Gewichtskräften G hin steigt die Kurve CL kontinuierlich an. Die Kontaktfläche der beiden leitfähigen Flächen 6 und 8 gewinnt immer mehr an Größe, bis das Sensorsignal auf einen konstanten Wert zuläuft. Danach kann auch bei einer weiteren Erhöhung der Gewichtskraft G kein zusätzliches Sensorsignal erzeugt werden.

Die gestrichelte Linie CS zeigt schematisch die charakteristische Kennlinie des kleinflächigen Sensorelements:
Bis zum Einsetzen eines Mindestsignals muss bei diesem Sensorelement mehr Gewichtskraft PS aufgebracht werden als bei dem großflächigen Sensorelement. Danach steigt auch diese Kennlinie kontinuierlich mit zunehmender Gewichtkraft G an, bis sie einen konstanten Wert erreicht, der auch bei weiterer Erhöhung der Gewichtskraft G nicht mehr zunimmt. Dieser konstante Maximale Signalwert ist für das kleinere Sensorelement niedriger als für das größere Sensorelement.

Im Unterschied zur Kurve CL ist die Steigung der Kennlinie CS allerdings steiler. Das Signal des kleinen Sensorelements CS reagiert wesentlich empfindlicher auf eine Änderung der Gewichtskraft G als das Signal des größeren Sensorelements CL. Dadurch sinkt die Auflösungsgenauigkeit der auf die Sensorelemente wirkenden Gewichtskraft. Gerade für die Klassifizierung eines Fahrzeuginsassen entsprechend seines Gewichtes kann es jedoch sehr wichtig sein, dass die Sensorkennlinie eine möglichst große Auflösung der einwirkenden Gewichtskraft zulässt. Eine Kennlinie mit geringer Steigung ist deshalb einer steileren Kennlinie vorzuziehen.

Bei Sensorelementen mit dem bekannten Aufbau aus zwei beabstandeten leitfähigen Flächen wird folglich die Aufgabe der Erfindung vorzugsweise durch solche leitenden Flächen erfüllt, die bei einer Verformung um eine Knicklinie entlang dieser eine größtmögliche Fläche aufweisen, das heißt: ihre Schnittlinie durch die Sensorfläche sollte entlang der Knicklinie möglichst lang sein. Wie bereits oben erwähnt erreicht die Schnittlinie der Sensorflächen entlang der Knicklinie einbaubedingt üblicherweise eine Länge, die um bis zu +-30% von der maximalen Schnittlinie abweichen kann.
Mit dieser Ausformung eines Sensorelements wird das Sensorsignal erst bei einer wesentlich stärkeren Durchbiegung maßgeblich beeinflusst als dies bei den bekannten rotationssymmetrischen Elementen der Fall ist.
In der zur Knicklinie senkrechten Ausdehnungsrichtung ist die Fläche vorzugsweise kleiner - das heißt die Schnittlinie der Sensorflächen entlang der Senkrechten zur Knicklinie ist kürzer - um eine sehr gute Signalauflösung zu erreichen.
Die in der Figur 1 gezeigte ovale Sensorfläche 1 ist ein Beispiel für die Realisierung der Erfindung.

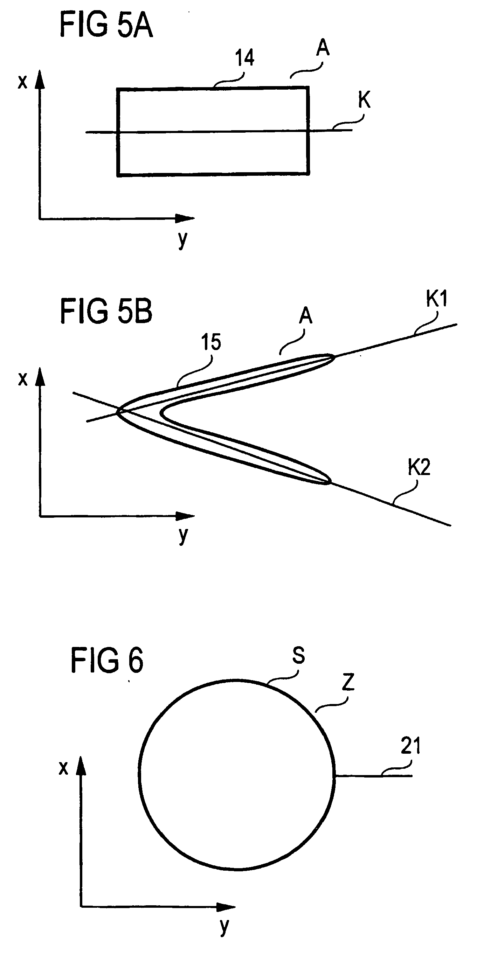

Die Figuren 5a und 5b zeigen weitere Ausführungsformen der Erfindung. Je nach Lage der Knicklinien des Sensorelements gibt es verschiedene vorteilhafte Sensorflächen:
Figur 5a zeigt eine rechteckige Sensorfläche 14 die sich besonders gut eignet für einen ebenfalls eingezeichneten Verlauf der Knicklinie K. Die ovale Sensorfläche 1 aus Figur 1 wäre hier jedoch ebenso gut einsetzbar.

Figur 5b zeigt ein bumerangförmiges Sensorelement 15 als bevorzugte Ausgestaltung der Sensorfläche im Bereich zweier sich schneidender Knicklinien K1 und K2.

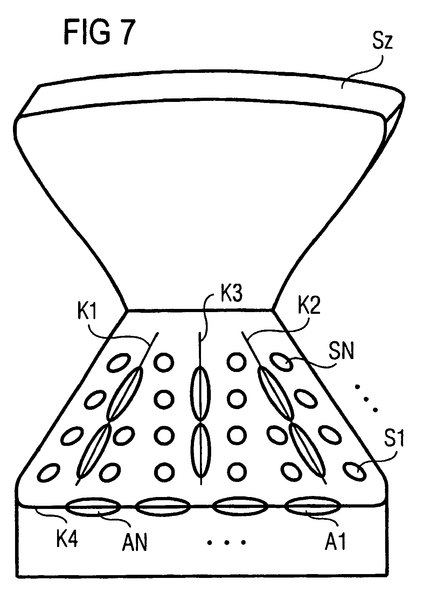

Figur 7 zeigt eine mögliche Anordnung von kreisförmigen und damit rotationssymmetrischen Sensorelementen S1, S2,...SN auf einem Fahrzeugsitz Sz. An den Knicklinien K1 bis K4 des Fahrzeugsitzes ist die Form der mehrheitlich kreisförmigen Sensorelemente S1 bis SN verändert in die ovale und damit asymmetrische - das heißt nicht rotationssymmetrische - Form der Sensorelemente A1 bis AN.

Die Erfindung ist nicht auf die beschriebenen Ausführungsbeispiele beschränkt. Vielmehr ist ein Vielzahl von Abwandlungen und Varianten möglich, die je nach vorgesehener Einbauposition eines Sensorelements verschieden sein kann.

## Patentansprüche

1. Flächige Sensoranordnung, insbesondere Sensorsitzmatte zur Sitzbelegungserkennung in einem Kraftfahrzeug, mit
- mehreren druckempfindlichen Sensorelementen (A,S), die flächig verteilt angeordnet sind, deren elektrisches Verhalten jeweils von dem örtlichen Wert einer Messgröße abhängig ist,
- mindestens einem nicht rotationssymmetrischen Sensorelement (A) auf einer einbaubedingten Knicklinie (K) der Sensoranordnung
mit
einer längsten Schnittlinie (12) durch die aktive Fläche des Sensorelements (A) entlang der Knicklinie (K).

2. Sensoranordnung nach Anspruch 1, wobei die Fläche des Sensorelements (A) oval ausgeformt ist.

3. Sensoranordnung nach Anspruch 1 oder 2 mit Sensorelementen (A, S) mit
- zwei übereinander angeordneten, nicht leitenden Folien (5, 7),
- einer leitfähigen Fläche auf der oberen Folie (6),
- einer zweiten leitfähigen Fläche auf der unteren Folie (8) und
- einem Bereich zwischen den leitfähigen Flächen (6, 8) gefüllt mit nicht leitendem Material (10).

4. Sensoranordnung nach einem der Ansprüche 1 bis 3 mit mehrheitlich rotationssymmetrischen Sensorelementen (S).

5. Sensoranordnung nach einem der Ansprüche 1 bis 4,
wobei auf den einbaubedingten Knicklinien (K1..KN) der Sensoranordnung ausschließlich nicht rotationssymmetrische Sensorelemente (AS) angeordnet sind.

## Claims

1. Planar sensor arrangements, in particular seat mat sensors for recognition of seat occupancy in a motor vehicle, having
- a plurality of pressure-sensitive sensor elements (A,S), which are arranged distributed in a planar manner,
the electrical performance of each being dependent upon the local value of a measured variable,
- at least one not rotationally symmetric sensor element (A) on an installation-dependent fold line (K) of the sensor arrangement
with
a longest line of intersection (12) through the active face of the sensor element (A) along the fold line (K).

2. Sensor arrangement according to claim 1, the face of the sensor element (A) being of an oval shape.

3. Sensor arrangement according to claim 1 or 2 with sensor elements (A, S) having
- two non-conductive films (5, 7) arranged one above the other,
- a conductive face on the upper film (6),
- a second conductive face on the lower film (8), and
- a region between the conductive faces (6, 8) filled with non-conductive material (10).

4. Sensor arrangement according to one of claims 1 to 3, having mainly rotationally symmetric sensor elements (S).

5. Sensor arrangement according to one of claims 1 to 4, with sensor elements (AS) arranged on the installation-dependent fold lines (K1..KN) of the sensor arrangement in an exclusively non rotationally symmetric manner).

## Revendications

1. Dispositif de capteurs en surface, en particulier natte de siège formant capteur, pour reconnaître l'occupation d'un siège dans un véhicule automobile,
comportant
- plusieurs éléments de capteurs (A, S) sensibles à la pression, qui sont disposés répartis en surface,
dont le comportement électrique dépend chaque fois de la valeur locale d'une grandeur de mesure,
- au moins un élément de capteur (A) non symétrique en rotation sur une ligne de pliage (K) du dispositif de capteurs, déterminée par l'implantation
comportant une ligne transversale (12) la plus longue, traversant la surface active de l'élément de capteur (A) le long de la ligne de pliage (K).

2. Dispositif de capteurs suivant la revendication 1, la surface de l'élément de capteur (A) ayant une forme ovale.

3. Dispositif de capteurs suivant la revendication 1 ou 2, avec des éléments de capteurs (A, S) comportant
- deux feuilles non conductrices (5, 7), disposées l'une au dessus de l'autre,
- une surface conductrice sur la feuille supérieure (6),
- une deuxième surface conductrice sur la feuille inférieure (8),
et
- une zone entre les surfaces conductrices (6, 8) remplie avec de la matière non conductrice (10).

4. Dispositif de capteurs suivant l'une des revendications 1 à 3, comportant en majorité des éléments de capteurs (S) à symétrie par rotation.

5. Dispositif de capteurs suivant l'une des revendications 1 à 4, des éléments de capteurs (AS) non symétriques en rotation étant disposés exclusivement sur les lignes de pliage (K1..KN) du dispositif de capteurs, dépendantes de l'implantation.
